Europäisches Patentamt

European Patent Office

Office européen des brevets

(11) Publication number: **0 407 682 A2**

# EUROPEAN PATENT APPLICATION

(21) Application number: 90101735.0

(51) Int. Cl.5: **B29C 47/12**, G02B 6/44

(22) Date of filing: 29.01.90

(30) Priority: **12.07.89 US 378757**

(43) Date of publication of application:
**16.01.91 Bulletin 91/03**

(84) Designated Contracting States:
**DE FR GB**

(71) Applicant: THE BOEING COMPANY
7755 East Marginal Way South
Seattle Washington 98124(US)

(72) Inventor: Pinson, George T.
12010 Queens Place S.E.
Huntsville, Alabama 35803(US)

(74) Representative: Baillie, Iain Cameron et al
c/o Ladas & Parry Isartorplatz 5z 5
D-8000 München 2(DE)

(54) Method and apparatus for manufacturing an elongated integral body having an axially varying cross-section, and the body made thereby.

(57) Apparatus including an extruder, a die having movable elements defining the die opening, and die element drive solenoids for varying the dimensions of the die opening during extrusion function to yield an elongated body having a varying axial cross-section. Individual die member drive means and a controller are used with the apparatus to produce smoothly varying, complex cross-sectional shapes in elongated bodies such as optical fibers for various applications.

EP 0 407 682 A2

# METHOD AND APPARATUS FOR MANUFACTURING AN ELONGATED INTEGRAL BODY HAVING AN AXIALLY VARYING CROSS-SECTION, AND THE BODY MADE THEREBY

Field of Invention :

The present invention relates to methods and apparatus for producing elongated bodies including optical fibers. Specifically, the present invention relates to methods and apparatus for producing elongated, integral bodies having a varying axial cross-section and the bodies so produced.

Background of the Invention

Many applications require an elongated body having a cross section varying in geometry and/or size along the axis of elongation. For example, and not by way of limitation, optical fibers used in some military weapons applications require the fiber and/or its protective coating (if jacketed) to be thicker along certain sections for strengthening or reinforcement against mechanical abuse or weapons launch blast effect. Ideally, there should be a smooth transition between the fiber sections of different thicknesses to prevent stress concentrations and optical signal distortion.

Currently, optical fibers with a varying cross-section can be fabricated by selectively removing fiber material from a fiber formed to the thickest dimension or by separately forming multiple individual strands of the optical fiber material, and then selectively fusing two or more fibers to form the desired thickened fiber sections. Protective coatings of varying thickness in the elongation direction are currently formed by using a liquified or melt-processible coating material, and by varying the immersion time for an uncoated optical fiber drawn through a coating bath. See our copending European Patent Application No. 87118967.6, filed 21, 1987, for a description of a suitable coating method and apparatus.

The above-described current methods and apparatus are not entirely satisfactory, particularly in respect to the optical fiber product with an axially varying dimension. Specifically, the methods and apparatus for removing material from pre-formed optical fibers can weaken the fiber by introducing microcracks or other surface irregularities giving rise to stress concentrations. Also, possible non-uniformities in fibers formed as composites can deteriorate signal quality and lead to structural failures.

SUMMARY OF THE INVENTION

The present invention may provide a method and apparatus for fabricating elongated, internally uniform bodies, such as optical fibers, having a cross-section varying in the elongation direction, and an exterior surface substantially free from stress-inducing irregularities. The present invention may also provide an improved variable cross-section elongated body, that is, one having increased internal uniformity and fewer surface irregularities.

Further, the present invention may provide an improved method for fabricating coated or "jacketed" optical fibers where the jacket thickness and/or shape changes along the axial direction.

In accordance with the present invention, there is provided apparatus for manufacturing an elongated body having an elongation axis and at least one axially varying cross-sectional dimension comprises means for moving a preform of extrudable material along the direction of the body axis; die means having an opening for receiving and plastically deforming the moving body preform, the opening having one or more characteristic dimensions defining substantially the geometric shape and size of the body cross-section, and means for varying at least one opening dimension while the preform is being moved through the opening.

Preferably, the die means includes at least one die member defining one of dimensions of the opening and movable in a direction having a vector component essentially radial to the body axis. The dimension varying means may include drive means operatively connected to selectively move the die member during movement of the preform through the opening.

The apparatus may further comprise dimension controller means operatively connected to the dimension varying means.

In accordance with another aspect of the present invention, there is provided a method of manufacturing an elongated, axially continuous body having an elongation axis, an axially continuous exterior surface, and an axially varying cross-section comprising the steps of continuously moving a preform of extrudable material along the axis; continuously plastically deforming the moving preform using die means having an opening with one or more characteristic dimensions defining substantially the extruded geometric shape and size of the body cross-section; and varying at least one dimension of the opening during the moving step.

Preferably, the die means includes at least one pair of opposing die members defining one or more dimensions of the opening and which are movable in directions having vector components perpendicular to the body axis, wherein the varying step includes the step of selectively moving the pair of die members relative to the body axis during the extruding step.

It is also preferred that the varying step is carried out at a slow rate relative to the speed at which the preform is moved through the opening, whereby the transition between axial portions of the body with different cross-sections is smooth.

In accordance with a further aspect of the present invention, there is provided an article of manufacture comprises an elongated, internally uniform extruded body having an elongation axis, the body having an axially continuous extruded surface and at least one axially varying cross-sectional dimension.

BRIEF DESCRIPTION OF THE DRAWING

Fig. 1A is a schematic of apparatus in accordance with the present invention, for producing an elongated, extruded body with an axially varying cross-sectional dimension;

Fig. 1B is a schematic cross-section of an elongated body made using the apparatus of Fig. 1A;

Fig. 2A is a schematic of an alternate die means for the apparatus of Fig. 1A;

Fig. 2B is a schematic detail of one of the individual die members and die member drive means depicted in Fig. 2A;

Fig. 3 is a schematic depicting overlapping arrangement of the die members shown in Fig. 2A;

Fig. 4A is an enlargement of the tip portions of the die members shown in Fig. 3;

Fig. 4B is a schematic cross-section of an elongated body produced using the die members in Fig. 4A;

Figs. 5A and 5B are longitudinal and axial views, respectively, of a variation in the die means of Fig. 2A showing the die membes axially and circumferentially offset;

Fig. 6 shows schematically another embodiment of apparatus made in accordance with the present invention and including an iris diaphragm die means.

Fig. 7 shows a detail of the Fig. 6 embodiment; and

Fig. 8 shows schematically yet another variation of the die means component of apparatus made in accordance with the present invention.

DESCRIPTION OF THE PREFERRED EMBODIMENTS

Reference will now be made to the present preferred embodiments of the invention which are illustrated in the accompanying drawing.

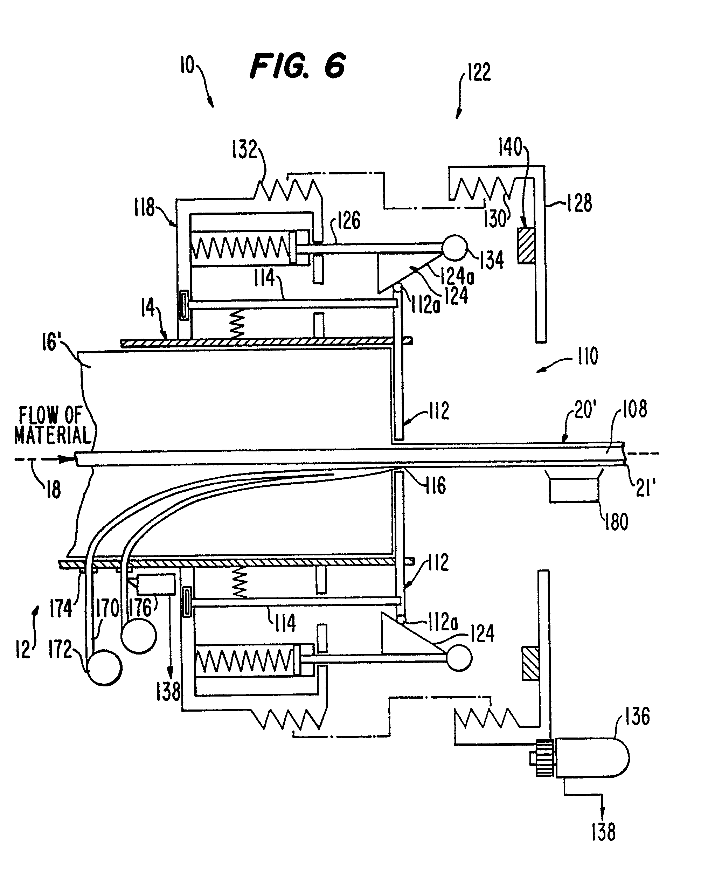

In accordance with the present invention, the apparatus for manufacturing an elongated, body having an elongation axis and at least one axially varying cross-sectional dimension includes means for moving a preform of extrudable material along the direction of the body axis. As embodied herein, and with initial reference to Figure 6, the apparatus designated generally by the numeral 10 includes extruder means 12 having extrusion tube 14. By means of a hydraulic or pneumatic force generated by mechanisms (not shown) well known to those skilled in the art, preform 16 of an extrudable material suitable for the desired elongated body is caused to flow in the direction of axis 18 of the extruded body to be formed (designated generally by the numeral 20 in Figure 6). It will be understood that the "extrusion" mechanisms contemplated herein can be replaced or augmented by mechanisms to effect a pulling or "drawing" force on the preform, and the use of the term "extrusion" is intended to encompass all such mechanisms. Similarly, the description of an "extruded" body, such as body 20 in Figure 6, is intended to include elongated bodies produced in accordance with the present invention by such "drawing" mechanisms as well as by extrusion mechanisms.

The choice of the preform material (preform 16 in Figure 6) will, of course, depend on the intended application. For the improved optical fibers disclosed herein, an extrudable material sold by Desota, Inc. under the designation DE SOLITE R 1400 has been found to perform acceptably. The term "internally uniform" used herein to designate the articles of the present invention refers to the cross-sectional properties of the material actually extruded and plastically deformed by the die means to be disclosed hereinafter, and does not restrict the present invention to a body having a homogeneous cross-section. It is contemplated that the improved articles of the present invention can include bodies such as the coatings or "jackets" surrounding optical fibers as well as other bodies having elongated members of a material different from the extruded matrix material (e.g. reinforcing wires or strands) around which the extruded material is formed, and hollow bodies as well.

Further in accordance with the present invention, the apparatus includes die means having an opening for receiving the moving body preform and continuously plastically deforming the preform. The opening has characteristic dimensions which define substantially the extruded geometric shape and size of the body cross-section. Other factors which may influence the exact final shape and dimensions include the resiliency of the material and any shrinkage or expansion upon curing. For an appropriate choice of preform materials and extrusion conditions, the effect of these factors can be minimized, however.

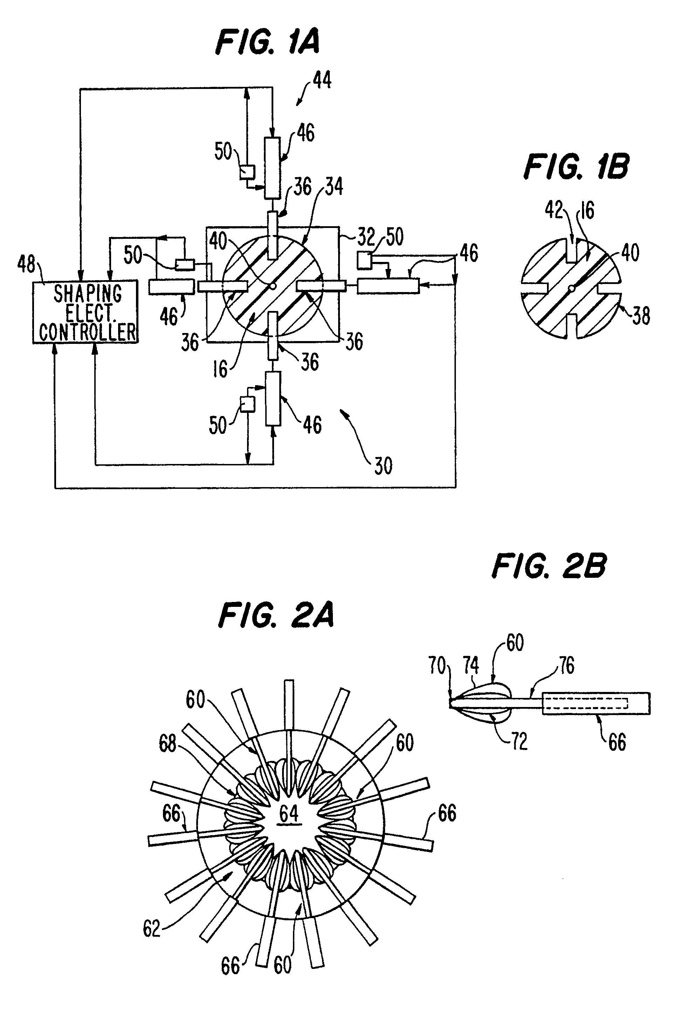

As embodied herein and with reference now to Figure 1A, the apparatus includes die means designated generally by the numeral 30. Die means 30 includes housing 32 and opening 34 therein for receiving preform material 16 being moved by the extrusion means (not shown). Die means 30 further includes one or more individual die members or shaping elements 36 (four being shown in Figure 1A) which determine, at least in part, the geometric shape and/or cross-sectional area of the extruded body, such as body 38 in Figure 1B. In the Figure 1A embodiment, die members 36 are movable selectively toward or away from axis 40 of body 38 by means to be discussed hereinafter. With die members 36 in the fully inserted position, the cross-section of body 38 (Figure 1B) includes four axial slots 42 in the exterior surface 44 of body 38. Such slots would extend axially and, for an optical fiber application, could for instance be used to incorporate strands of a reinforcing material. Withdrawal of die members 36 during extrusion of body 38 would cause the depth dimension of slots 42 to become progressively smaller and disappear entirely when die members 36 reach the periphery of opening 34 (shown dotted in Figure 1A). The cross-section of body 38 corresponding to extrusion through opening 34 with fully withdrawn die members 36 would be essentially circular, as depicted by the dotted lines in Figure 1B.

Importantly, if the withdrawal speed of die members 36 is slow compared to the extrusion speed, a smooth transition will be achieved between the slotted and unslotted sections of elongated body 38. Also, the cross-sectional shape of body 38 could be substantially elliptical, rectangular, or any other geometric pattern depending on the desired application. The path of movement of die member 36 is essentially purely radial in the Figure 1A embodiment but a path having both tangential and radial vector components also is within the scope of the presently claimed invention.

Further in accordance with the present invention, the apparatus includes means for varying at least one opening dimension while the preform is being moved through the opening. As embodied herein and with continued reference to Figure 1A, the dimension varying means includes drive means 44 operatively connected to selectively move die members 36 during extrusion of the elongated body 38. Drive means 44 includes typically individual electrically activated solenoids 46 connected to the individual die members 36. One or more solenoids 46 can be activated to move the respective die members 36 either in unison or according to any predetermined pattern. For instance, only one or an opposing pair of die members 36 might be retracted or inserted at the same or different rates, and to the same or different depth positions, for a particular application. All of these situations could be accommodated by the embodiment disclosed in Figure 1A.

Preferably, the apparatus further includes controller means, such as shaping electrical controller 48 in Figure 1A, operatively connected to the opening dimension varying means, in this oase solenoids 46 of drive means 44. Linear potentiometers 50 or similar devices can be used to provide feedback to controller 48 as to the positions of die members 36.

The use of a large number of die member shaping elements with each element defining a respective dimension or portion of the overall die opening, can be used to effect an arbitrary body cross-sectional shape. Depending on the complexity of the cross-sectional shape desired, the die members can be arranged in a single row, or in multiples of circumferential rows, encircling the body axis. One such embodiment of die means made in accordance with the present invention and including a large number of die members is illustrated in Figure 2A. In the Figure 2A embodiment, a plurality of die member shaping elements 60 is arranged in a circumferential row and mounted in housing strongback member 62 to define opening 64. Each die member is radially movable by individual solenoids 66 such that opening 64 is expandable from a minimum area (as depicted) to a larger area dictated essentially by inner diameter 68 of housing member 62. As best seen in Figure 2B, each individual die member 60 includes tip 70, opposing blade element 72, 74, and shaft element 76. Each tip 70 serves to define substantially a portion of opening 64 and blades 72, 74 serve to obturate the remaining area encompassed by housing inner diameter 68. The size and shape of tip 70 is chosen to best reproduce the desired shape of opening 64. Materials and coatings, such as diamond like carbon, can be used to reduce the wear of tip 70, as would be appreciated by one skilled in the art.

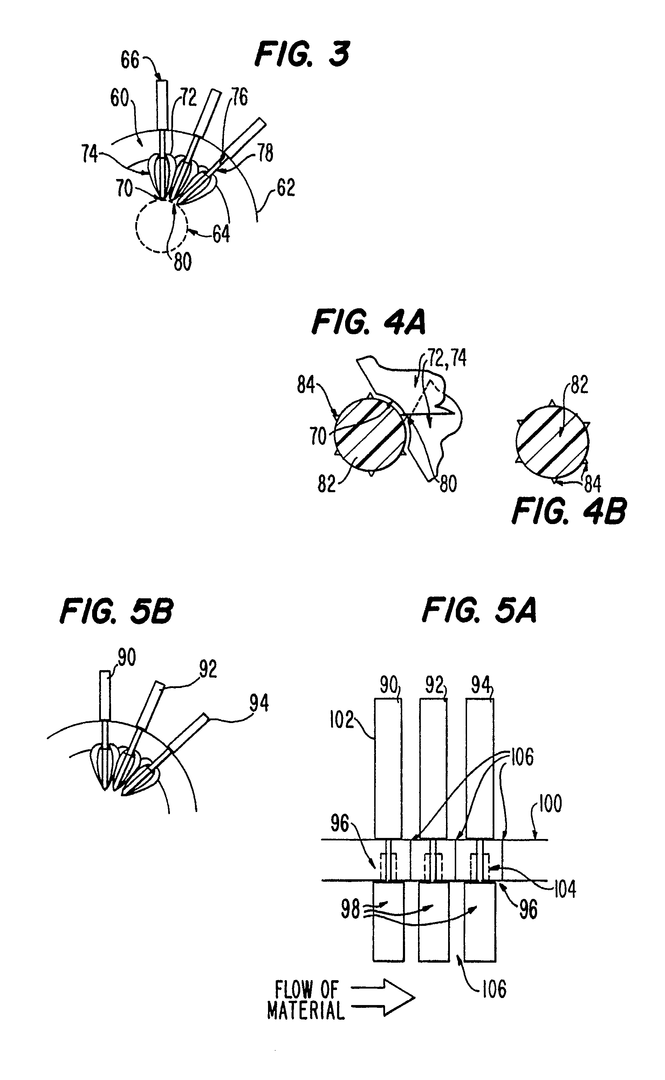

Importantly, and as best seen in Figure 3, each of blades 72 can be configured to partially overlap blade 74 adjacent die member 60 to provide increased rigidity against the axial forces of the preform material being extruded. Appropriate slots 78 can be provided in housing strongback member 62 to permit withdrawal of die member 60 including blades 72, 74 from the fully inserted position shown in Figures 2A and 3.

Due to available space considerations, it may not be possible to have complete overlap of adjacent blades 72, 74 such that small gaps 80 do not occur between adjacent tip elements 70. As a result, and as best seen in Figures 4A and 4B, extruded body 82 can have a plurality of small rays 24. Although not objectionable from a stress concentration standpoint, such rays can be eliminated by embodiments of the present invention having multiple circumferential rows of die elements as is depicted in Figures 5A and 5B. In the Figure 5A embodiment, three axial rows 90, 92, 94 of die members 96 are shown, with each die member 96 having cooperating blade elements 98 operatively mounted in housing strongback member 100. Solenoids 102 provide vertical movement of the respective die members 96, and slots 104 provided in strongback member 100 allow passage of blade elements 98. Rows 90, 92, 94 are axially offset only a small distance (exaggerated for clarity in Figure 5A) to permit mounting and independent operation.

Importantly, rows 90, 92, 94 are also circumferentially offset such that individual die members of axially adjacent rows are not coaxial but are staggered. Rows 92, 94 which are downstream of row 90 relative to the direction of material flow, thus can act to remove any rays 84 that may be generated by the row 1 configuration. Rotary joints 106 can be used to provide means for selecting or changing the degree of angular offset between the rows.

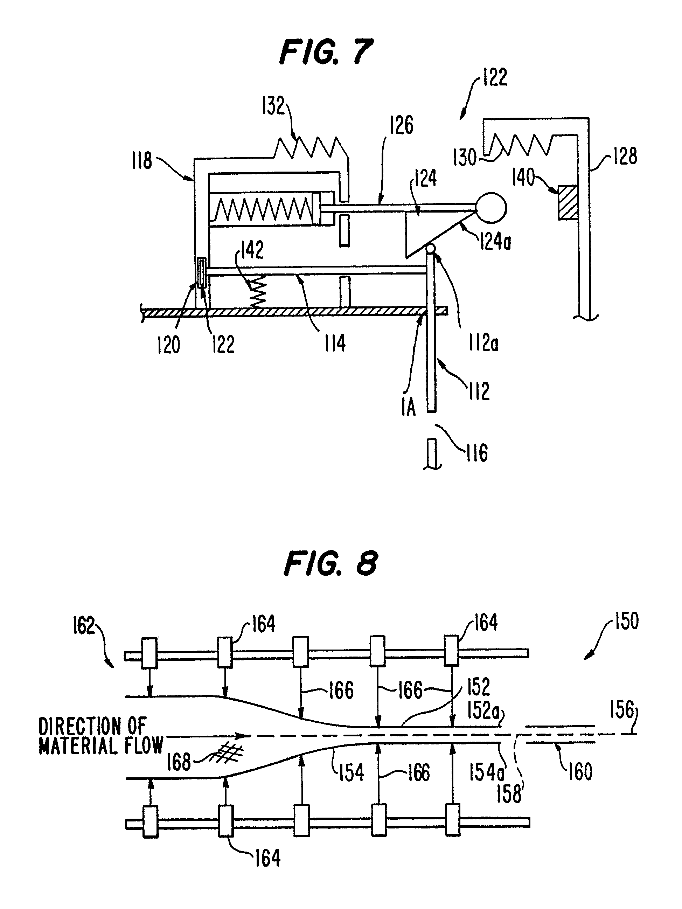

Figures 6 and 7 depict an alternative embodiment of the die means and opening dimension varying means of the present invention shown manufacturing a reinforced, coated optical fiber wherein the optical fiber is of constant cross-section but where the coating or "jacket" varies in thickness.

In Figure 6, a coating-type extrudable material designted 16′, such as PVC, is extruded to surround an optical fiber 108 which has a constant cross-sectional shape, to form a composite extruded body designated 20, having a jacket portion 21′. By the die means to be discussed hereinafter, the thickness of jacket portion 21′ can be made to vary along the elongation axis 18 of the composite body.

In Figure 6, die means 110 includes individual die members 112, each mounted for rotation with a respective shaft element 114, and being partially overlapped in the circumferential direction to provide an iris diaphragm-like configuration defining opening 116. In the Figure 6 embodiment, each shaft element 114 is fixed to the respective die member 112, and is mounted for rotation in fixed die housing element 118. Figure 7 shows details of a contemplated mounting arrangement for shaft 114 including enlarged drive shaft capture element 120 fixed to the end of shaft 114 opposite die member 112, and capture slot 122 formed in housing element 118. Other mounting arrangements for shaft 114 could be used.

In accordance with the present invention, variations in the size of opening 116 in the Figure 6 embodiment are accomplished by drive means generally designated 122 which determines the position of respective die member edge portions 112a, and thus the angular position of each die member 112 about the respective shaft 114. As embodied herein, drive means 122 includes annular cam 124 having an axially directed cam face 124a. Cam 124 is mounted on spring-biased positioning pin assembly 126 which, in turn, is mounted on housing element 118. Annular adjustable element 128 is provided which includes threaded portion 130 for mating with threaded portion 132 of housing element 118. Annular adjustable element 128 also includes pin depressor 140 aligned to contact head element 134 of pin assembly 126.

In operation, as annular adjustable element 128 is rotated, pin depressor 140 moves axially as a consequence of the threaded interconnection between annular adjustable element 128 and housing element 118. Spring-biased pin positioning assembly 126 and cam 126 are constrained to follow the axial movement of pin depressor 140 such that a different portion of cam surface 126a engages die member edge 112a. A consequent change in angular position of die member 112 occurs and, of necessity, the size of opening 116 is changed accordingly. Spring 142 acting on shaft 114 biases die element edge 112a against cam surface 124a. Preferably, the rotation of annular adjustable element 128 can be automatically controlled such as by geared connection to stepping motor 136 operatively interconnected to a controller 138, similar to that described in relation to the Figure 1 embodiment.

The apparatus depicted in Figure 6 also can be used to fabricate composite elongated bodies with reinforcement fibers or strands such as made from Kelvar disposed in the direction of elongation. In Figure 6, reinforcing fibers 170 are fed from spool supplies 172 through orifices 174 in extrusion tube 14 to be passed through opening 116 along with optical fiber 108 as material 16′ is extruded. Orifices 174 can be agate or hardened steel with dimensions closely conforming to the size and shape of fibers 170. Means such as cutter 176 can be provided to selectively stop the feed of one or more reinforcing fibers 70 during manufacture of a composite reinforced body with a decreasing cross-section. Cutter 176 can be controlled by controller 138, in this respect. Also, means such as UV or heat lamps 180 can be provided at the exit of opening 116 to assist in curing extrudable material 16'.

Figure 8 shows yet another alternative embodiment of the die means and dimension varying means constructed in accordance with the present invention. As embodied in Figure 8, die means designated generally 150 includes at least a pair of opposing flexible die member elements 152, 154 extending in the direction of elongation 156. Each of flexible die member elements 152, 154 are positioned by drive means 162, including one or more solenoids 164 acting through respective shaft elements 166 of the die means. The Figure 8 embodiment is useful where a gradual deformation force is required as a consequence of the characteristics of the preform material 168. The downstream edges 152a, 154a of elements 152, 154 partially define opening 158, and thus additional die elements, such as fixed die walls (not shown) between which elements 152, 154 are disposed, are used to define the shape of extruded body 160. Alternately, movable die members made in accordance with the present invention can be positioned downstream of flexible die member elements 152, 154 to complete the plastic deformation of preform 168, and define the final shape of extruded body 160.

It will be apparent to those skilled in the art that various modifications and variations can be made in the above described apparatus and methods of manufacture without departing from the scope of the present invention. Thus it is intended that the present invention cover such modifications and variations provided they come within the scope of the appended claims and their equivalents.

**Claims**

1. An article of manufacture comprising an elongated, internally uniform extruded body having an elongation axis, said body having an axially continuous extruded exterior surface and at least one axially varying cross-sectional dimension.

2. The body as in claim 1 wherein the geometric shape of the body cross-section varies along its axis.

3. The body as in claims 1 or 2 wherein the area of the body cross-section varies along its axis.

4. The body as in claim 3 having a substantially circular cross-sectional shape along its axis.

5. A method of manufacturing an elongated, axially continuous body having an elongation axis, an axially continuous exterior surface, and an axially varying cross-section, the method comprising the steps of:
a) continuously moving a preform of extrudable material along the axis;
b) continuously plastically deforming the moving preform using die means having an opening with one or more characteristic dimensions defining substantially the extruded geometric shape and size of the body cross-section; and
c) varying at least one dimension of the opening during the moving step.

6. The method as in claim 5 wherein the die means includes at least one die member defining one of the dimensions of the opening and movable in a direction having a vector component perpendicular to the body axis, and wherein said varying step includes the step of selectively moving the die member relative to the body axis during the extruding step.

7. The method as in claim 5 wherein the die means includes at least one pair of opposing die members defining one or more dimensions of the opening and movable in directions having vector components perpendicular to the body axis, and wherein said varying step includes the step of selectively moving the pair of die members relative to the body axis during the extruding step.

8. The method as in claim 7 wherein both of the die members are moved the same distance and at the same rate.

9. The method of claims 5 to 8 wherein said varying step is carried out at a slow rate relative to the speed at which said preform is moved through said opening, whereby the transition between axial portions of the body with different cross-sections is smooth.

10. Apparatus for manufacturing an elongated, body having an elongation axis and at least one axially varying cross sectional dimension, the apparatus comprising:
means for moving a preform of extrudable material along the direction of the body axis;
die means having an opening for receiving and plastically deforming said moving body preform, said opening having one or more characteristic dimensions defining substantially the geometric shape and size of the body cross-section;
means for varying at least one opening dimension while said preform is being moved through said opening.

11. The apparatus as in claim 10 wherein said die means includes at least one die member defining one of said dimensions of said opening and being movable in a direction having a vector component essentially radial to the body axis, and wherein said dimension varying means includes drive means operatively connected to selectively move said die member during movement of said preform through said opening.

12. The apparatus as in claims 10 or 11 further comprising dimension controller means operatively connected to said varying means.

13. The apparatus as in claim 11 wherein said die member drive means includes a solenoid.

14. The apparatus as in claim 11 including a plurality of die members spaced circumferentially about the body axis, each of said die members defining respective ones of said dimensions of said opening.

15. The apparatus as in claim 14 wherein said die member comprises a shaft element and an attached blade element including a tip portion, said blade being configured to partially overlap said blade elements of adjacent die members to provide support thereto.

16. The apparatus as in claim 14 wherein at least some of said plurality of die members are also spaced axially and wherein means are provided for adjusting the angular offset of said some die members relative to the other of said plurality of die members.

17. The apparatus as in claim 14 wherein said die means includes a housing member, and wherein said plurality of die members are operatively mounted to said housing member in an iris diaphragm-like configuration to define said opening, each of said plurality of die members being rotatable about a respective die member axis disposed parallel to said body axis for effecting movement of a respective die member part selectively toward or away from said body axis.

18. The apparatus as in claim 17 wherein said drive means includes camming means for rotating each of said die members.

19. The apparatus as in claim 18 wherein said drive means includes a rotary actuator operatively engaging said camming means.

20. The apparatus as in claim 11 wherein a pair of die members are disposed one each on opposing sides of said body, and wherein each of said die members includes a flexible member extending in the elongation direction for contacting and shaping the body preform, and one or more rigid shaft members operatively interconnected between said flexible member and said drive means.

21. The apparatus as in claims 10 to 20 further including means cooperating with said moving means for feeding one or more elongated reinforcing fibers through said die means opening together with said extrudable material.

22. The apparatus as in claims 10 to 21 wherein said extrudable material is UV or heat curable, the apparatus further comprising lamp means disposed downstream of said die means opening relative to the extrusion direction.

FIG. 1A

FIG. 1B

FIG. 2A

FIG. 2B

8

**FIG. 3**

**FIG. 4A**

**FIG. 4B**

**FIG. 5B**

**FIG. 5A**

FLOW OF
MATERIAL

# FIG. 6

FLOW OF
MATERIAL

**FIG. 7**

**FIG. 8**

DIRECTION OF MATERIAL FLOW